# FASCICULE DE BREVET EUROPEEN

(11) **EP 2 571 707 B1**
(45) Date de publication et mention de la délivrance du brevet: **08.04.2015**
(21) Numéro de dépôt: 11726189.1
(22) Date de dépôt: 20.05.2011
(51) Int. Cl.: B60J 10/00

(54) **ARMATURE THERMOPLASTIQUE POUR PROFILÉ D'ÉTANCHÉITÉ OU D'ENJOLIVEUR DE VÉHICULE AUTOMOBILE, PROFILE L'INCORPORANT ET PROCÉDÉ DE FABRICATION D'ARMATURES**
THERMOPLASTISCHE DICHTUNG ODER ZIERLEISTE FÜR KFZ UND DAZUGEHÖRIGES VERFAHREN ZUR FERTIGUNG
THERMOPLASTIC WEATHER STRIP OR DECORATION STRIP FOR AUTOMOBILES INCLUDING MANUFACTURING METHOD

(30) Priorité: 20.05.2010 FR 1002129
(43) Date de publication de la demande: 27.03.2013
(73) Titulaire: Hutchinson, 75008 Paris (FR)
(72) Inventeur: BARATIN, Sylvain, 45120 Corquilleroy (FR); CHAPEAU, Philippe, 45260 La Cour Marigny (FR); BLOTTIAU, Olivier, 45120 Cepoy (FR)
(74) Mandataire: Bolinches, Michel Jean-Marie
(86) Numéro de dépôt international: PCT/IB2011/052219
(87) Numéro de publication internationale: WO 2011/145082

(56) Documents cités:
- EP-A1- 1 093 902
- DE-C1- 19 544 291
- FR-A1- 2 324 852
- FR-A1- 2 684 157
- US-A- 4 304 816
- US-A- 6 079 160
- US-B2- 7 135 216

## Description

La présente invention concerne une armature thermoplastique cintrable en particulier pour profilé d'étanchéité ou d'enjoliveur de véhicule automobile, un tel profilé l'incorporant et un procédé de fabrication d'armatures thermoplastiques cintrables en général incluant celles selon l'invention, à titre non limitatif. L'invention s'applique notamment à de tels profilés qui sont aptes à être fixés sur une feuillure de cadre et qui forment des joint d'ouvrants latéraux ou avant/ arrière de véhicules automobiles de type tourisme, utilitaires ou poids lourds, comme par exemple les joints d'entrée de porte latérale, les joints de coffre, de hayon ou de porte arrière battante, les joints sous capot, les joints de coulisse pouvant être de type demi-coulisse intérieure, mono-feuillure ou « truck-style » (i.e. de type camion), les joints de double étanchéité, les joints de passage de roue ou les joints antisalissure.

D'une manière générale, les profilés d'étanchéité pour ouvrants de portes de véhicule automobile comportent une zone de tenue, telle qu'une pince de section en U, sur une feuillure réceptrice d'un cadre avec en plus dans certains cas une partie adjacente souple et déformable permettant d'assurer en tous points l'étanchéité entre l'ouvrant et le dormant de la carrosserie, par exemple. Ces profilés doivent essentiellement répondre aux exigences suivantes :
- tenue par serrage sur la feuillure et résistance aux sollicitations susceptibles d'amorcer un arrachement ou « dégrafage » vis-à-vis de cette feuillure ;
- flexibilité pour épouser la forme parfois complexe du périmètre de montage avec des rayons de courbure plus ou moins faibles, et pour faciliter leur conditionnement ;
- stabilité de la pince sur la feuillure pour prévenir son basculement (et éventuellement la perte de contact étanche) ou une déformation excessive de la zone d'étanchéité, ce qui dépend notamment du positionnement de la fibre neutre du profilé (i.e. de sa ligne ou de son plan fictif longitudinal ne présentant aucune déformation de type compression ou extension lorsque ce profilé suit un rayon) ;

- facilité de montage ou « agrafage » sur la feuillure ;
- faible poids pour participer à l'allégement du véhicule ;
- faible coût de fabrication et, de préférence, recyclabilité.

Ces profilés d'étanchéité connus incorporent un renfort flexible qui est généralement une armature métallique présentant des découpes avec ou sans retrait de matière, obtenues de façon mécanique par exemple par fentage ou sciage, par cisaillage et étirage, ou encore par poinçonnage d'une bande métallique plate pour obtenir les motifs souhaités. Cette armature est ensuite usuellement recouverte par extrusion d'un enrobage élastomère pour assurer la bonne préhension sur la feuillure et, le cas échéant, l'étanchéité entre un ouvrant et un dormant de la carrosserie ou entre un élément de tôle et un vitrage de cet ouvrant.

Le document US-A-6 079 160 présente un tel profilé d'étanchéité dont l'armature métallique en U renforçant la pince est entaillée et est en outre munie sur l'un de ses deux jambages d'un ruban longitudinal continu prévu pour définir la fibre neutre du profilé.

En dépit de la maîtrise de la fibre neutre qui peut être ainsi assurée, ces armatures métalliques présentent l'inconvénient majeur d'être relativement lourdes, coûteuses à fabriquer et non recyclables en même temps que le reste du profilé (du fait de la nécessité de séparer les matériaux métalliques et non métalliques avant de les valoriser), ce qui engendre un coût de recyclage supplémentaire.

C'est pourquoi l'on a cherché depuis quelques années à réaliser ces armatures flexibles en un matériau thermoplastique, en formant par exemple des ajours dans une ébauche plate d'armature par calandrage puis en enrobant puis en conformant cette ébauche pour obtenir la pince en U du profilé, comme présenté dans le document US-B2-7 135 216. On obtient ainsi une armature recyclable et de poids réduit, mais qui présente l'inconvénient majeur que l'on ne maîtrise pas la fibre neutre du profilé du fait que les ailes de la pince en U du profilé obtenu ont tendance à s'ouvrir avec le temps par effet de mémoire du matériau.

Il est également connu par le document EP-B1-1 093 902 au nom de la Demanderesse de fabriquer une armature thermoplastique pour profilés d'étanchéité dont la section définitive par exemple en U avec un sommet et deux ailes est directement obtenue par calandrage, pour l'obtention en chaque aile d'une succession de jambes séparées entre elles par des ajours venus de calandrage (i.e. sans opération de post-formage). A cet effet, on fait passer le matériau thermoplastique destiné à former l'armature entre un galet mâle gravé suivant une empreinte en creux (i.e. définissant le « négatif » du profil d'armature à obtenir) et un galet femelle qui vient recouvrir tangentiellement ce galet mâle et qui est entraîné en co-rotation synchrone avec ce dernier.

Une armature ainsi calandrée sans post-formage donne des résultats satisfaisants notamment en termes de flexibilité du profilé d'étanchéité l'incorporant sur le périmètre de feuillure le recevant. Cependant, l'expérience montre que cette armature calandrée ne permet pas toujours de conférer au profilé des valeurs de serrage suffisantes sur la feuillure, contrairement à un profilé avec armature métallique.

Dans le cadre de ses recherches, la Demanderesse a cherché à pourvoir par ce procédé de calandrage une telle armature en U d'une fibre neutre longitudinale, afin d'améliorer encore l'étanchéité obtenue en tout point du périmètre de la feuillure vis-à-vis des entrées d'eau, d'air et de poussière dans le véhicule dans tous les cas de positionnement de l'ouvrant (e.g. compte tenu des tolérances de fabrication des différents composants et des jeux d'assemblage). Or, les essais réalisés par la Demanderesse ont montré que ce procédé de calandrage ne permet de former une telle fibre neutre que sur le sommet du U de l'armature (i.e. en zone tangentielle des galets de calandrage du fait de leur mouvement relatif de rotation), et l'expérience a montré que cette fibre neutre sommitale pour l'armature n'est pas à même de supprimer le risque de basculement de la pince du profilé lors de sa prise de certains rayons de courbure sur la feuillure, entraînant ainsi potentiellement des pertes de contact étanche et des risques d'entrée d'eau, d'air et/ou de poussière entre cette feuillure et ce profilé.

Un but de la présente invention est de proposer une armature thermoplastique cintrable pour profilé d'étanchéité ou d'enjoliveur de véhicule automobile, l'armature comprenant au moins un tronçon longitudinal de section transversale sensiblement en U ou en L présentant un sommet ou base et au moins un jambage s'étendant à partir de ce sommet, cette armature comprenant sur sa longueur une succession discontinue de portions transversales reliées entre elles par des éléments de liaison longitudinaux, qui remédie aux inconvénients précités en présentant au moins une fibre neutre longitudinale qui soit positionnable de manière variable et réglable en divers emplacements de l'armature sans limitation à une zone prédéterminée de celle-ci telle que son sommet, dans le cas où ledit tronçon est en forme de U.

Ce but est atteint en ce que la Demanderesse a découvert d'une manière surprenante que si l'on extrude au moins un matériau thermoplastique destiné à former l'armature à travers une filière formée entre une tête d'extrudeuse et un organe de réception du matériau quittant cette tête qui est muni d'une empreinte en creux conçue pour former directement ledit sommet et ledit au moins un jambage dudit ou de chaque tronçon, de manière que ce matériau ainsi extrudé recouvre progressivement cet organe de réception, alors on peut notamment obtenir directement par cette extrusion particulière et après séparation de ce matériau d'avec cet organe, une armature selon l'invention dans laquelle lesdits éléments de liaison comprennent une nervure globalement longitudinale qui est formée d'un seul tenant avec lesdites portions transversales en ledit ou chaque jambage et qui est conçue pour former une fibre neutre pour le profilé.

Par l'expression « au moins un tronçon longitudinal de section transversale sensiblement en U ou en L », on entend une armature pouvant comporter une combinaison d'un ou de plusieurs tronçons de section en U et/ou d'un ou de plusieurs tronçons de section en L, étant précisé que le sommet ou base du U ou du L peut être aussi bien plat qu'arrondi.

Selon un autre aspect de l'invention, cette armature selon l'invention, qui peut être ainsi exclusivement extrudée, est alors telle que ladite ou chaque nervure est directement venue d'extrusion.

On notera qu'une armature selon l'invention présente ainsi l'avantage d'être compatible avec des rayons de courbure d'un profilé en U l'incorporant tant positifs que négatifs (par rayons positifs et négatifs, on se réfère de manière connue à des cintrages réalisés de part et d'autre d'un plan parallèle au sommet du U et perpendiculaire à ce sommet, respectivement), comme c'est le cas notamment pour des profilés formant des joints d'entrée de porte. En effet et comme cela sera expliqué ci-après, ce procédé d'extrusion selon l'invention permet dans le cas d'une armature de section en U de régler à volonté la forme et le positionnement de la fibre neutre sur les deux jambages du U et non sur son sommet contrairement au procédé précité de calandrage ce qui, en relation avec les ajours séparant lesdites portions transversales, améliore ainsi la stabilité de la pince du profilé sur la feuillure en minimisant son risque de basculement et donc les pertes de contact étanche sur cette feuillure en tout point du périmètre de celle-ci.

Selon une autre caractéristique de l'invention, lesdites portions transversales peuvent être séparées deux à deux entre elles par des espaces transversaux allant d'un bord latéral libre à l'autre de l'armature et peuvent être exclusivement reliées entre elles par ladite ou chaque nervure et, en ledit sommet dudit au moins un tronçon longitudinal, ces portions transversales peuvent ne pas être reliées entre elles (i.e. elles sont indépendantes) ou bien peuvent l'être via des voiles interstitiels d'épaisseur réduite, à la manière des voiles décrits dans le document EP-B1- 1 093 902 précité.

On notera que la formation de ces espaces transversaux de séparation exclut, dans le cas où ledit au moins un tronçon longitudinal est de section en U, tout agencement en quinconce desdites portions transversales sur les deux jambages du U.

De préférence, lesdites portions transversales se succédant dans ledit au moins un tronçon longitudinal sont identiques (à l'instar desdits espaces transversaux), étant précisé qu'ils pourraient être localement de géométries différentes en étant alors séparés par des espaces transversaux également différents.

Selon une autre caractéristique de l'invention, ladite ou chaque nervure peut s'étendre de manière continue le long desdites portions transversales, de telle manière qu'à une abscisse longitudinale donnée de cette nervure corresponde sur ledit au moins un jambage une unique ordonnée transversale de cette nervure (i.e. une « altitude » par rapport audit sommet correspondant). En d'autres termes, ladite ou chaque nervure est exempte d'allers-retours sur sa longueur, s'étendant ainsi continûment en direction d'une extrémité de l'armature.

Selon un exemple de réalisation de l'invention, ladite ou chaque nervure est rectiligne ou sous forme de ligne brisée, et est globalement parallèle audit sommet ou inclinée par rapport à ce dernier. En variante, ladite ou chaque nervure peut être incurvée en étant soit progressivement inclinée vers ledit sommet, soit ondulée en s'éloignant puis en se rapprochant alternativement dudit sommet (par exemple à la manière d'une sinusoïde).

Avantageusement, ledit au moins un jambage présentant une face interne et une face externe (par définition respectivement tournées vers et à l'opposé dudit sommet), une armature selon l'invention peut être telle que ladite ou chaque nervure forme une surépaisseur sur ladite face interne ou externe (i.e. sur l'une ou l'autre des deux faces du jambage) de hauteur transversale réduite par rapport à celle de ce jambage.

De préférence, ladite ou chaque nervure est creuse sur sa longueur, un fil anti-allongement (e.g. en fibres de verre, en polyamide tel que du « Nylon », en cuivre ou encore en tout autre matériau adapté) y étant inséré pour raidir l'armature dans la direction longitudinale.

Selon une autre caractéristique optionnelle de l'invention, ledit au moins un jambage, sur au moins une partie de la longueur de l'armature, y a chacune de ses portions transversales qui est asymétrique et d'aire supérieure à celle de chaque espace transversal de séparation adjacent. Chaque portion asymétrique dudit au moins un jambage peut avantageusement présenter sensiblement une forme de dent de scie comprenant deux bords de dent qui présentent chacun un profil droit ou incurvé et qui se rejoignent en une extrémité de dent pointue ou arrondie, de sorte que ladite au moins une partie d'armature soit sensiblement en forme de denture de scie dont les dents sont inclinées d'un même côté, chaque jambe asymétrique présentant de préférence sensiblement une forme de virgule dont l'un desdits bords de dent est incurvé de manière convexe et dont l'autre bord de dent est sensiblement droit ou incurvé de manière concave.

On notera que cette géométrie asymétrique des portions transversales localisées sur ledit ou chaque jambage permet que le profilé incorporant cette armature recouverte du matériau souple d'enrobage, d'une part, s'ouvre à la prise de rayon et, d'autre part, présente un fonctionnement amélioré lors du montage/ démontage sur/ de la feuillure du cadre, par une optimisation de sa raideur. En effet, cette géométrie asymétrique implique que le matériau thermoplastique rigide qui est utilisé pour l'armature peut être présent en plus grande quantité (i.e. selon une masse plus élevée) que dans les armatures de l'art antérieur.

On notera également que cette géométrie asymétrique procure une aptitude améliorée au cintrage du profilé incorporant l'armature, du fait que l'enrobage souple remplissant ces espaces transversaux s'allonge plus facilement proportionnellement à sa hauteur par rapport à la fibre neutre du profilé.

On notera en outre que ces portions transversales de jambage(s) formant cette espèce de denture de scie peuvent présenter une inclinaison constante ou bien évolutive (i.e. progressive, soit de plus en plus prononcée dans un sens de l'armature).

Avantageusement, une armature selon l'invention peut être réalisée en au moins un matériau thermoplastique rigide apte à être extrudé et présentant un module d'Young compris entre 1000 MPa et 10000 MPa en fonction des charges renforçantes utilisées, et de préférence compris entre 2000 MPa et 6000 MPa. Encore plus avantageusement, ce matériau thermoplastique peut être à base d'au moins un polymère thermoplastique (TP) qui est par exemple choisi dans le groupe constitué par les polypropylènes, les polyamides, les chlorures de polyvinyle (PVC), les polyméthacrylates de méthyle (PMMA), les terpolymères acrylonitrile-butadiène-styrène (ABS) et leurs mélanges, et qui est de préférence un polypropylène renforcé par une charge par exemple choisie dans le groupe constitué par le talc, le chanvre, le bois, le liège, les fibres de verre et leurs mélanges (la fonction de cette charge étant d'augmenter la rigidité du matériau de base). On notera que d'autres polymères thermoplastiques sont utilisables pour réaliser une armature selon l'invention, et que le choix de ces polymères répond en particulier à un compromis entre le coût et la rigidité des matériaux en question.

Egalement avantageusement, ladite ou chaque nervure peut être réalisée en un matériau thermoplastique identique ou différent de celui desdites portions transversales, et ce matériau peut être choisi plus souple ou plus rigide que celui de ces portions en fonction de la rigidité de ce dernier. Le matériau de ladite ou de chaque nervure peut incorporer une charge renforçante identique ou différente de celle du reste de l'armature et selon un taux identique ou différent (on peut par exemple prévoir pour la ou chaque nervure une charge en fibres de verre ou en chanvre selon une fraction massique comprise entre 20 et 40 %, le reste de l'armature pouvant être chargé en talc selon une fraction massique également comprise entre 20 et 40 %).

Selon un mode préférentiel de réalisation de l'invention, ledit au moins un tronçon longitudinal présente une section transversale sensiblement en U destinée à servir de pince pour le profilé et présentant deux jambages de longueurs identiques ou différentes qui s'étendent sensiblement à angle droit à partir dudit sommet et qui incorporent chacun sur leur face interne ou externe ladite nervure.

On notera que les nervures ainsi respectivement formées sur ces deux jambages du U peuvent être symétriques l'une de l'autre par rapport au sommet du U ou bien asymétriques par rapport à ce sommet, cette asymétrie pouvant être choisie selon les applications envisagées et/ou selon la géométrie de la feuillure du cadre.

Selon un premier exemple de l'invention relatif à ce mode préférentiel, l'armature est constituée d'un unique dit tronçon longitudinal de section transversale sensiblement en U (ou en forme de demi-S).

Selon un second exemple de l'invention relatif à ce mode préférentiel, l'armature est constituée de deux dits tronçons longitudinaux de sections transversales sensiblement en U qui se prolongent mutuellement dans la direction transversale de sorte que l'armature présente trois jambages sensiblement parallèles entre eux, le jambage latéral adjacent aux deux jambages formant pince incorporant lui aussi optionnellement une dite nervure. Conformément à ce second exemple, l'armature peut avantageusement présenter une section transversale sensiblement en S à trois jambages de hauteurs identiques ou différentes, ledit jambage latéral incorporant optionnellement une dite nervure sur l'une de ses faces (i.e. sur sa face interne tournée vers les deux autres jambages ou bien sur sa face externe opposée).

Un profilé d'étanchéité ou d'enjoliveur de véhicule automobile selon l'invention comporte une armature thermoplastique telle que définie ci-dessus et au moins un enrobage élastomère plus souple que cette armature et extrudé sur cette dernière.

Selon un exemple de l'invention, ce profilé comporte essentiellement, dans le cas d'un profilé d'étanchéité :
- une partie formant pince qui est renforcée par l'armature pour son montage sur une feuillure de cadre et dont l'enrobage est réalisé en un matériau élastomère souple compatible avec celui de l'armature, et qui est de préférence à base d'au moins un caoutchouc, tel qu'un EPDM, ou d'au moins un élastomère thermoplastique (TPE), tel qu'un élastomère thermoplastique styrénique (TPS, e.g. un SEBS) ou un vulcanisat thermoplastique (TPV, e.g. du « Santoprene » ou du « Vegaprene ») ou d'autres TPE présentant des propriétés similaires de module à 100 % d'allongement et de résistance à la rupture, et
- une partie d'étanchéité souple et déformable tubulaire ou en forme de lèvre, qui est réalisée en au moins un matériau élastomère (par exemple un TPE tel qu'un TPV ou un TPS ou bien un caoutchouc tel qu'un EPDM) de préférence cellulaire et qui prolonge cette partie formant pince en une aile du U.

Un autre but de la présente invention est de proposer un procédé de fabrication d'armatures thermoplastiques cintrables et ajourées pour profilés d'étanchéité ou d'enjoliveur de véhicule automobile, notamment d'une armature telle que définie ci-dessus (i.e. par exemple à portions transversales reliées entre elles en ledit au moins un jambage par ladite nervure), qui permette notamment de régler à volonté les motifs ajourés réalisés sur la longueur de l'armature et, dans le cas particulier des armatures à nervure(s) selon l'invention, de « piloter » en fonction de l'application et du montage envisagé le positionnement et/ou la géométrie de la ou de chaque nervure formant fibre neutre du profilé.

A cet effet, un procédé de fabrication d'armatures ajourées selon l'invention comprend une extrusion d'au moins un matériau thermoplastique à travers une filière formée entre une tête d'extrudeuse et un organe de réception du matériau quittant la tête qui est muni d'une empreinte en creux conçue pour former directement cette armature, de manière que ce matériau ainsi extrudé recouvre progressivement cet organe de réception, puis une séparation de ce matériau d'avec l'organe de réception.

On notera que ce procédé d'extrusion ne doit pas être confondu avec un calandrage, qui par définition implique un passage de matière entre deux galets ou cylindres tournants, et que cette extrusion permet avantageusement de « piloter » le positionnement et la forme de la fibre neutre du profilé ultérieurement obtenu.

On notera également que dans le cas particulier de ladite armature à nervure(s) selon l'invention, ledit sommet et ledit au moins un jambage dudit ou de chaque tronçon muni de ladite nervure sont ainsi extrudés d'un seul tenant.

Selon une autre caractéristique de ce procédé de l'invention, l'armature comprenant alors au moins un tronçon longitudinal de section transversale sensiblement en U ou en L présentant un sommet et au moins un jambage s'étendant à partir de ce sommet, ladite filière peut être formée par une tête d'extrudeuse fixe recouvrant tangentiellement la périphérie d'une roue qui forme ledit organe de réception et qui tourne autour de son axe de manière que sa périphérie pénètre à l'intérieur de cette tête ou soit pénétrée par cette tête pour que le matériau extrudé recouvre progressivement cette périphérie de roue lors de sa rotation, laquelle périphérie peut présenter, d'une part, au moins un flanc périphérique radial présentant une empreinte en creux formant ledit au moins un jambage lors de son recouvrement par ledit matériau et, d'autre part, au moins un bord circonférentiel présentant une empreinte en creux formant ledit au moins un sommet lors de son recouvrement.

En variante, ladite filière peut être formée par une tête d'extrudeuse fixe recouvrant tangentiellement la périphérie d'une chenille ou d'un tapis roulant qui forme ledit organe de réception et dont la cinématique comprend une succession de mouvements de translation et de rotation autour de deux axes, de manière que la périphérie de cette chenille ou de ce tapis pénètre à l'intérieur de cette tête ou soit pénétrée par cette tête pour que le matériau extrudé recouvre progressivement cette périphérie lors de sa cinématique, laquelle périphérie présente, d'une part, au moins un flanc périphérique radial présentant une empreinte en creux formant ledit au moins un jambage lors de son recouvrement par ledit matériau et, d'autre part, un bord circonférentiel présentant une empreinte en creux formant ledit au moins un sommet lors de son recouvrement.

Selon un premier exemple de mise en oeuvre de ce procédé de l'invention commun tant à la roue qu'à la chenille ou tapis roulant pour former l'organe de réception, ladite périphérie de cet organe présente une forme saillante qui pénètre à l'intérieur de ladite tête, pour l'obtention de ladite ou de chaque nervure sur une face spécifiquement externe dudit ou de chaque jambage (i.e. sur sa face opposée audit sommet de l'armature).

Selon un second exemple de mise en oeuvre de ce procédé également commun à ces différentes géométries d'organe de réception, ladite périphérie de cet organe présente une forme rentrante à l'intérieur de laquelle pénètre ladite tête, pour l'obtention de ladite ou de chaque nervure sur une face spécifiquement interne dudit ou de chaque jambage (i.e. sur sa face tournée vers ledit sommet de l'armature).

On notera que l'on pourrait utiliser à titre d'organe de réception un autre dispositif techniquement équivalent à la roue, au tapis roulant ou à la chenille précités, étant entendu que la géométrie de l'armature ainsi extrudée peut être aménagée en fonction du choix de cet organe.

On notera également que la géométrie optionnellement asymétrique précitée (e.g. en forme de virgule) des portions transversales de l'armature ainsi extrudée sur ledit au moins un jambage permet d'améliorer la séparation et donc l'extraction de cette armature vis-à-vis de la périphérie de la roue, en comparaison d'armatures à jambes globalement triangulaires mais symétriques par rapport à leur extrémité libre.

Avantageusement et comme indiqué précédemment, on notera d'une manière générale que ce procédé de l'invention, quelle que soit la forme de l'armature obtenue, est exempt de toute étape de post-formage dudit au moins un matériau thermoplastique extrudé, telle qu'une étape de découpe, de sciage ou d'entaillage.

D'autres caractéristiques, avantages et détails de la présente invention ressortiront à la lecture de la description suivante de plusieurs exemples de réalisation de l'invention, donnés à titre illustratif et non limitatif, et réalisée en référence avec les dessins joints, parmi lesquels :
la figure 1 est une vue en coupe transversale suivant le plan I-I de la figure 4 d'un profilé d'étanchéité de type joint de porte pour véhicule automobile incorporant dans sa pince une armature en U selon l'invention à portions transversales reliées entre elles par deux nervures latérales, ce plan de coupe traversant une portion transversale,
la figure 2 est une vue en coupe transversale du profilé de la figure 1 suivant le plan II-II de la figure 4, ce plan de coupe étant localisé entre deux portions transversales,
la figure 3 est un diagramme à blocs montrant les principales étapes d'un procédé de fabrication d'un profilé selon l'invention tel que celui de la figure 1 avec extrusion de l'armature thermoplastique et sur-extrusion d'un enrobage en recouvrement de cette armature,
la figure 4 est une vue schématique partielle de côté et en perspective d'une armature thermoplastique en U à nervures latérales selon un exemple de l'invention,
la figure 5 est une vue schématique partielle de côté et en perspective selon un autre angle de l'armature de la figure 4,
la figure 6 est une vue schématique partielle à la fois de face et en perspective de l'armature des figures 4 et 5,
la figure 7 est une vue schématique partielle à la fois de face et en perspective d'une armature en U selon une variante des figures 4 à 6,
la figure 8 est une vue frontale de l'armature de la figure 7,
la figure 9 est une vue schématique partielle de côté et légèrement en perspective d'une armature en U selon une autre variante des figures 4 à 6,
la figure 10 est une vue schématique partielle de côté et en perspective selon un autre angle de l'armature de la figure 9,
la figure 11 est une vue schématique partielle de côté et en perspective d'une armature en S à nervures latérales selon un exemple de l'invention,
la figure 12 est une vue frontale de l'armature de la figure 11,
la figure 13 est une vue schématique partielle de côté et en perspective d'une armature en S à nervures latérales selon une variante des figures 11 et 12,
la figure 14 est une vue frontale de l'armature de la figure 13,
la figure 15 est une vue schématique partielle de dessous et en perspective d'une armature en S à nervures latérales selon une autre variante des figures 11 et 12,
la figure 16 est une vue schématique partielle de côté et en perspective de l'armature de la figure 15,
la figure 17 est une vue schématique frontale d'une armature en S à nervures latérales selon une autre variante des figures 11 et 12,
la figure 18 est une vue schématique frontale d'une armature en S à nervures latérales selon une autre variante des figures 11 et 12,
la figure 19 est une vue latérale schématique d'une tête d'extrudeuse recevant une roue tournante munie d'une empreinte périphérique en creux et coopérant avec cette tête pour former une filière d'extrusion utilisable pour la mise en oeuvre du procédé de fabrication d'armatures selon l'invention,
la figure 20 est une vue schématique partielle en perspective latérale montrant en agrandissement la rotation de la roue de la figure 19 à l'intérieur de la tête d'extrudeuse,
la figure 21 est une vue schématique partielle de face et en perspective, montrant en agrandissement la géométrie de la filière d'extrusion illustrée aux figures 19 et 20, qui est définie par l'intervalle existant entre l'intérieur de la tête d'extrudeuse et l'empreinte de la roue,
la figure 22 est une vue latérale schématique de la tête d'extrudeuse recevant la roue tournante selon les figures 19 à 21, l'empreinte périphérique de cette roue étant progressivement recouverte du matériau extrudé destiné à former l'armature,
la figure 23 est une vue latérale schématique partielle d'une autre armature en U selon l'invention à jambes asymétriques, pouvant être obtenue par un procédé selon l'invention,
la figure 24 est une vue latérale partielle illustrant la séparation d'une armature extrudée selon une variante de la figure 23 d'avec l'empreinte périphérique de la roue tournante des figures 19 à 22,
la figure 25 est une vue schématique partielle de face illustrant la géométrie saillante de la périphérie de la roue à l'intérieur de la tête d'extrudeuse selon la figure 21, pour l'obtention d'une armature à nervures externes du type de celle des figures 4 à 6,
la figure 26 est une vue schématique partielle de face illustrant, selon une variante de la figure 25, la géométrie saillante de la tête d'extrudeuse à l'intérieur de la périphérie de la roue selon la figure 21, pour l'obtention d'une armature à nervures internes,
les figures 27 et 28 sont deux vues schématiques en coupe transversale de la filière de la figure 25 montrant l'extrusion de l'armature respectivement à travers une portion transversale nervurée de celle-ci et entre ses portions transversales consécutives reliées par ces nervures externes, et
les figures 29 et 30 sont deux vues schématiques en coupe transversale de la filière de la figure 26 montrant l'extrusion de l'armature respectivement à travers une portion transversale nervurée de celle-ci et entre ses portions transversales consécutives reliées par ces nervures internes.

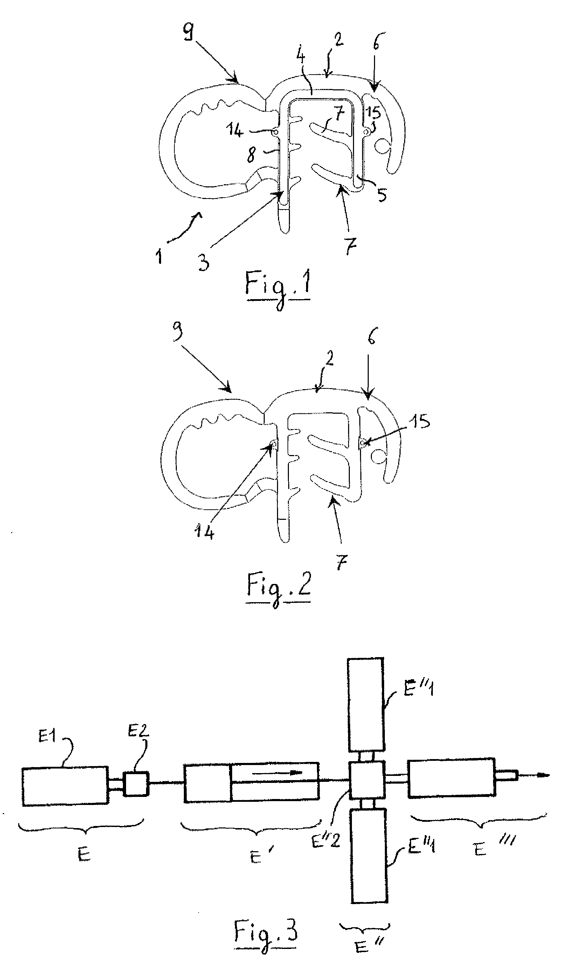

Le profilé d'étanchéité 1 illustré aux figures 1 et 2 est destiné à former un joint d'ouvrant latéral de véhicule automobile assurant l'étanchéité entre cet ouvrant et la carrosserie du véhicule, et il comprend :
- une pince 2 en un matériau élastomère souple (par exemple à base d'au moins un TPE tel qu'un TPS ou un TPV, ou d'au moins un caoutchouc tel qu'un EPDM) qui est renforcée par une armature thermoplastique rigide 3 en U pour son montage sur une feuillure de cadre et qui se prolonge à la jonction entre l'âme 4 et une aile 5 du U par une lèvre « cosmétique » 6 réalisée également en un matériau thermoplastique souple et rabattue le long de l'aile 5, cette pince comportant sur les faces internes respectives de ses ailes 5 et 8 des lèvres d'agrafage 7 sur la feuillure, et
- un tube d'étanchéité souple et déformable 9 (remplacé avantageusement par une lèvre dans certains profilés) qui prolonge la pince 2 à la jonction entre l'âme 4 et l'autre aile 8 du U et qui est réalisé en un matériau élastomère par exemple cellulaire (e.g. en au moins un TPE tel qu'un TPS ou un TPV, ou en au moins un caoutchouc tel qu'un EPDM).

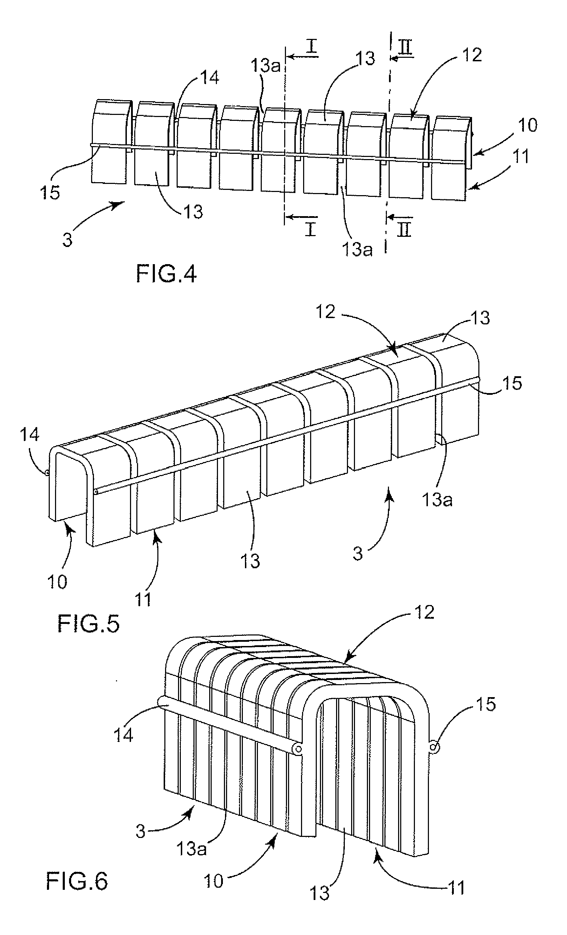

Plus précisément et comme visible à l'exemple des figures 4 à 6, l'armature 3 en U présente deux jambages 10 et 11 s'étendant à partir d'un sommet 12 et elle est constituée d'une succession discontinue de portions transversales 13 en U qui sont régulièrement espacées sur la longueur de l'armature 3 par des espaces ou ajours transversaux 13a et qui sont uniquement reliées entre elles en ces deux jambages 10 et 11 par deux nervures longitudinales 14 et 15 respectivement formées sur ces derniers et destinées à former une fibre neutre pour le profilé 1.

Les profilés d'étanchéité 1 ou d'embellissement selon l'invention, tels que ceux de la figure 1, sont avantageusement obtenus par un procédé d'extrusion de l'armature thermoplastique rigide 3 avec une sur-extrusion du reste du profilé 1 constituant l'enrobage souple de l'armature 3, comme illustré à la figure 3. On y distingue une étape initiale d'extrusion E de l'armature 3 (réalisée dans une tête d'extrudeuse E1 munie d'une filière E2, dont la structure et le fonctionnement seront décrits ci-après), suivie d'une étape de refroidissement E' de l'armature 3 ainsi extrudée, puis une sur-extrusion E" d'un enrobage thermoplastique souple au contact de cette armature 3 extrudée et refroidie via une tête d'extrudeuse E"1 munie d'une filière E"2 et enfin un calibrage E'" du profilé extrudé 1 ainsi obtenu.

En complément, l'on peut envisager une amélioration de la tenue de l'enrobage sur l'armature 3 en intégrant au procédé de fabrication, avant insertion dans le dispositif d'enrobage, une étape de réactivation de la surface de l'armature 3 (e.g. par chauffage, traitement plasma ou un bombardement électrique de surface de type « Corona » par exemple), ou bien une enduction (e.g. par pulvérisation, goutte à goutte étalé au pinceau) ou encore une sur-extrusion d'une couche intermédiaire compatibilisante entre le(s) matériau(x) de l'armature 3 et le(s) matériau(x) d'enrobage.

L'armature thermoplastique 3 illustrée aux figures 4 à 18 est ainsi obtenue exclusivement par extrusion d'un matériau thermoplastique rigide, tel qu'un matériau à base d'un polypropylène, à titre préférentiel.

On peut par exemple utiliser un polypropylène renforcé par du talc selon une fraction massique de talc pouvant varier de 0 à 50 % et de préférence comprise entre 30 % et 40 %. A titre non limitatif, on peut utiliser 30 % de talc avec un module d'Young obtenu pour l'armature 3 d'environ 2300 MPa, ou bien 40 % de talc avec dans ce cas un module d'Young pour l'armature 3 d'environ 4000 MPa.

En variante, on peut avantageusement utiliser un polypropylène renforcé par des fibres de verre courtes et/ou longues selon une fraction massique de fibres de verre pouvant varier de 0 à 60 % et de préférence comprise entre 30 % et 40 %, avec un module d'Young obtenu pour l'armature 3 d'environ 5900 MPa pour 30 % de fibres de verre longues et d'environ 6600 MPa pour 30 % de fibres de verre courtes.

Selon d'autres variantes de l'invention, on peut utiliser un polypropylène renforcé par des fibres courtes et/ou longues de chanvre, selon une fraction massique de chanvre pouvant varier de 0 à 40 %, ou bien renforcé par un mélange de talc et de fibres de verre, à titre non limitatif.

Comme visible aux figures 4 à 6, l'armature 3 a dans cet exemple deux jambages 10 et 11 de hauteurs différentes qui lui confèrent une géométrie asymétrique par rapport au sommet 12 (lequel est sensiblement plat), et les nervures 14 et 15 venues d'extrusion d'un seul tenant avec les jambages 10 et 11 sont situées à une même hauteur sur la face externe de ces derniers (dans cet exemple dans la moitié haute de chaque jambage 10, 11). Chacune de ces nervures 14 et 15 forme ainsi une fibre neutre pour le profilé incorporant l'armature 3. On voit à ces figures que les espaces transversaux 13a sont réduits en étant quasiment interstitiels dans la direction longitudinale par rapport aux portions transversales 13. Toujours dans cet exemple illustré, chaque nervure 14, 15 présente une forme rectiligne parallèle au sommet 12 en étant sensiblement cylindrique et creuse sur sa longueur, un fil anti-allongement par exemple en fibre de verre (non représenté) y étant avantageusement inséré.

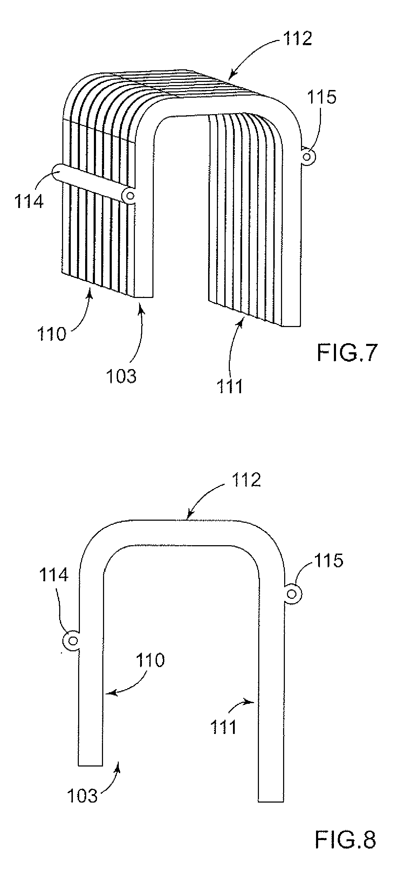

L'armature 103 des figures 7 et 8 se distingue uniquement de celle des figures 4 à 6, en ce que les deux nervures 114 et 115 qu'elle incorpore sur ses jambages 110 et 111, lesquels sont également de hauteurs différentes, sont formées en des hauteurs différentes sur les faces externes de ces derniers (ces nervures 114 et 115 sont également rectilignes et parallèles au sommet 112).

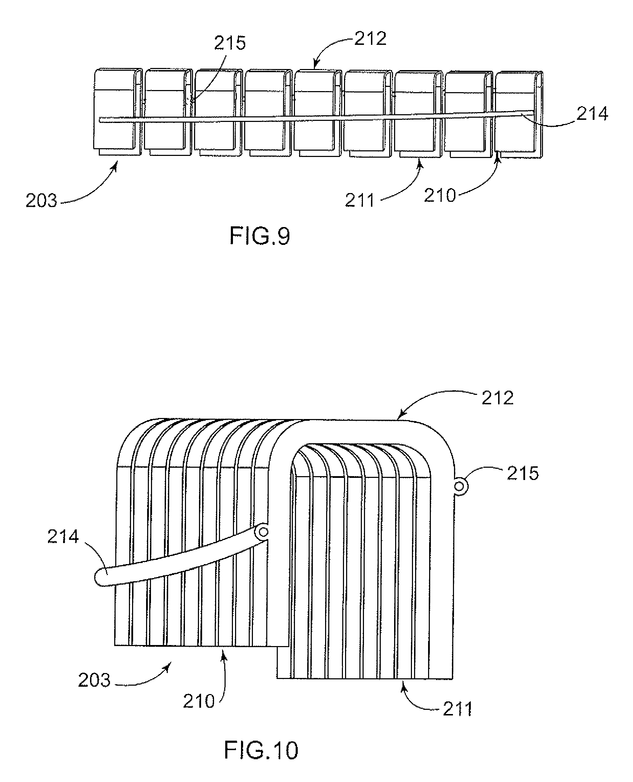

L'armature 203 des figures 9 et 10 se distingue uniquement de celle des figures 7 et 8, en ce que les deux nervures 214 et 215 qu'elle incorpore sur ses jambages 210 et 211, lesquels sont toujours de hauteurs différentes, ne sont pas parallèles au sommet 212 mais globalement obliques par rapport à ce dernier dont elles se rapprochent toutes deux progressivement vers une extrémité donnée de l'armature 203, de telle manière que chaque nervure 214, 215 soit continûment incurvée (dans cet exemple, elle l'est avec une pente croissante vers le sommet 212). On voit également aux figures 9 et 10 que ces nervures 214 et 215 s'étendent à des hauteurs différentes sur les jambages 210 et 211, à l'instar des figures 7 et 8.

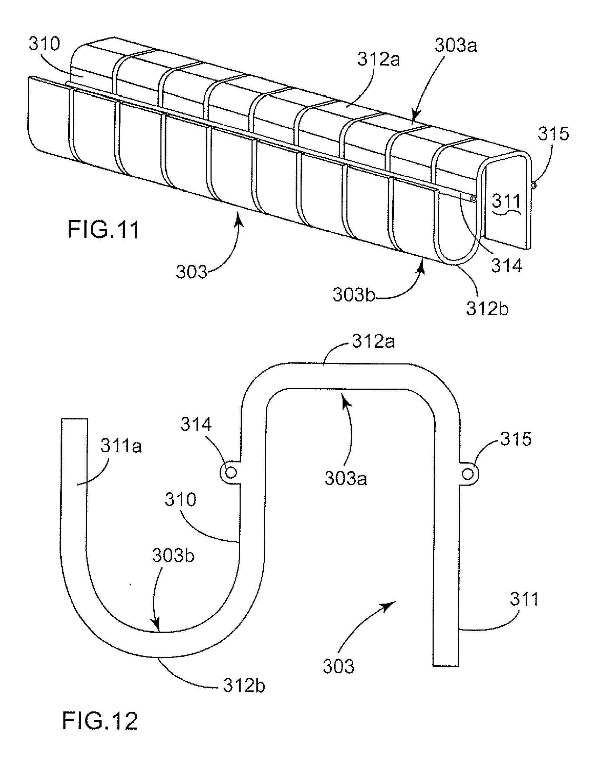

L'armature 303 des figures 11 et 12 se distingue de celle des figures 4 à 6, en ce qu'elle prolonge transversalement un tronçon longitudinal 303a en U à sommet 312a sensiblement plat analogue à l'armature 3 (ce tronçon 303a étant destiné à servir de pince pour le profilé incorporant l'armature 303 en vue de son montage sur une feuillure), sur les jambages 310 et 311 desquels sont respectivement formées à une même hauteur donnée deux nervures externes 314 et 315, par un autre tronçon longitudinal 303b en U qui forme une espèce de S avec le précédent. Le tronçon 303b présente dans cet exemple un jambage externe 311a parallèle aux jambages 310 et 311, et un sommet 312b de forme arrondie qui est opposé au sommet 312a du tronçon 303a de sorte que les concavités internes respectives de ces tronçons 303a et 303b soient inversées.

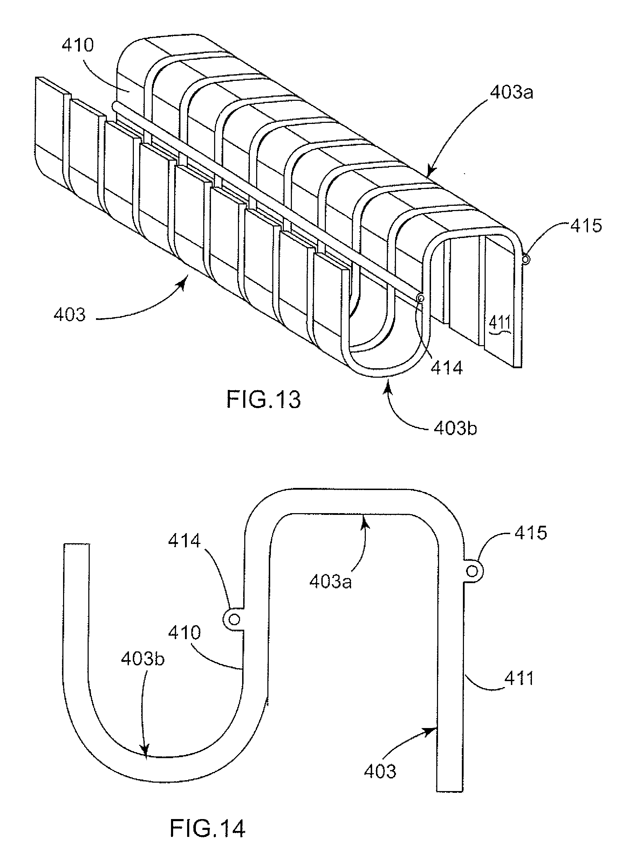

L'armature 403 en S des figures 13 et 14 se distingue uniquement de celle des figures 11 et 12, en ce que ses deux nervures 414 et 415 sont formées à des hauteurs différentes sur les faces externes des jambages respectifs 410 et 411 du tronçon 403a destiné à servir de pince pour le profilé, l'autre tronçon renversé 403b étant analogue au tronçon 303b.

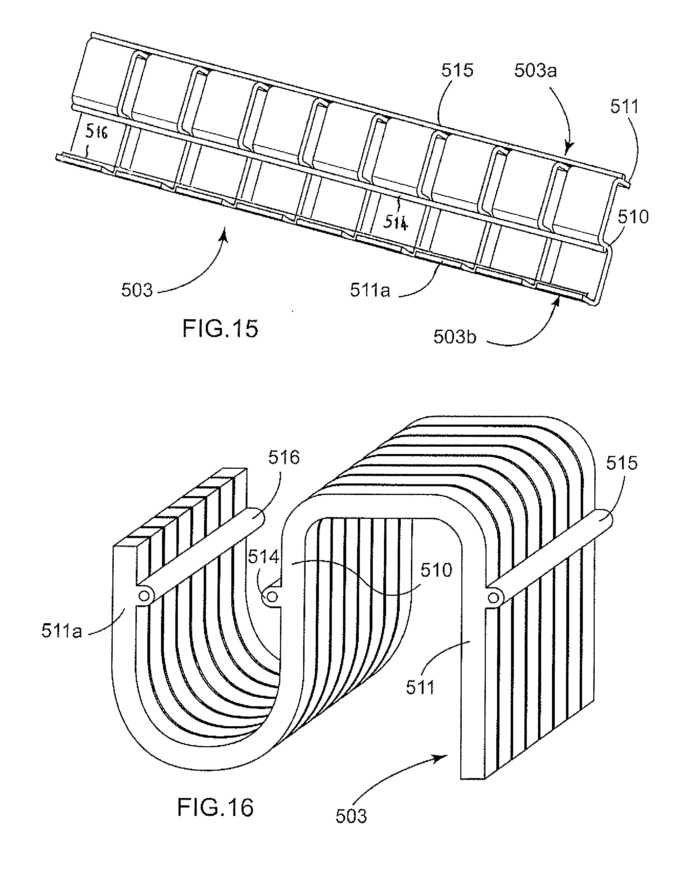

L'armature 503 en S des figures 15 et 16 se distingue uniquement de celle des figures 11 et 12, en ce que son tronçon 503b prolongeant transversalement le tronçon 503a formant pince et se terminant par un jambage externe 511a parallèle aux jambages 510 et 511 du tronçon 503a, est tel que ce jambage 511a est également nervuré sur sa face interne en regard des deux autres 510 et 511 via une troisième nervure 516 (formée dans cet exemple à la même hauteur que les deux nervures 514 et 515 du tronçon 503a) de sorte à former également une fibre neutre pour le profilé incorporant cette armature 503.

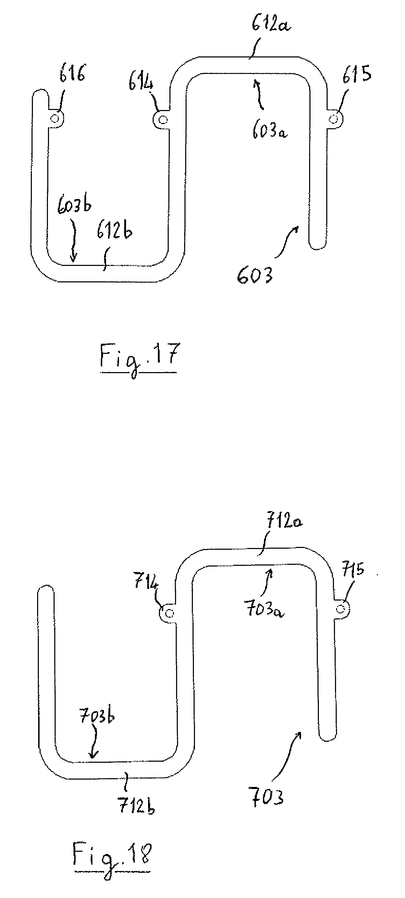

L'armature 603 en S et à trois nervures 614, 615 et 616 de la figure 17 se distingue uniquement de celle des figures 15 et 16, en ce que son tronçon 603b prolongeant le tronçon 603a formant pince présente un sommet 612b sensiblement plat, à l'instar du sommet 612a du tronçon 603a.

L'armature 703 à deux nervures 714 et 715 de la figure 18 se distingue uniquement de celle des figures 11 et 12, en ce que son tronçon 703b prolongeant le tronçon 703a formant pince présente également un sommet 712b sensiblement plat, à l'instar du sommet 712a du tronçon 703a.

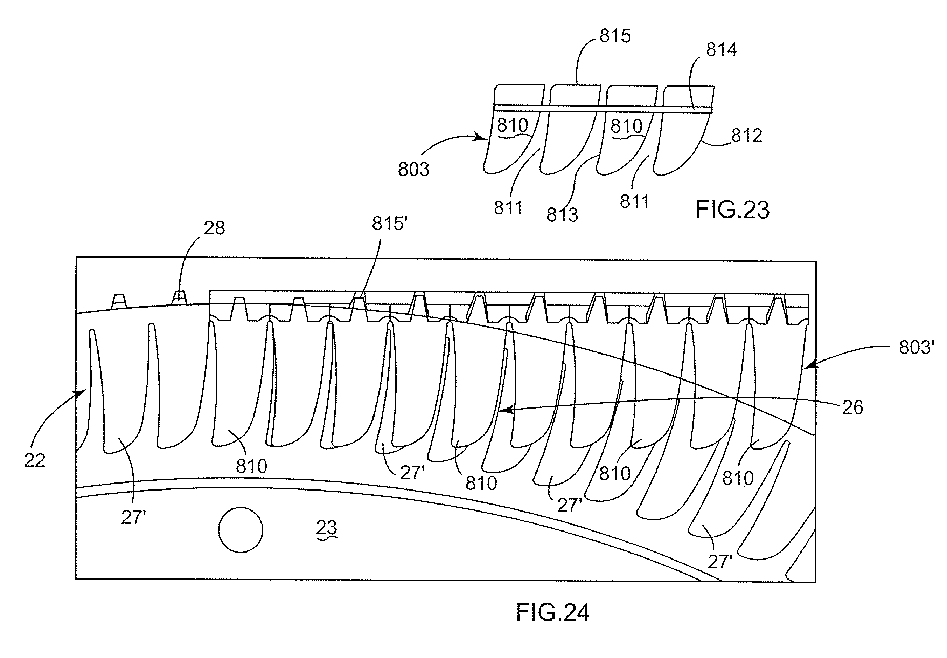

L'armature 803 de la figure 23 est de section transversale en U et à deux nervures 814 symétriques l'une de l'autre (une seule est visible sur cette figure), à l'instar des figures 4 à 6. Cependant, cette armature 803 présente en ses deux jambages parallèles une succession de paires de jambes latérales asymétriques 810 latéralement en regard l'une de l'autre qui sont séparées entre elles par des ajours transversaux 811 et qui sont profilées vers les bords libres respectifs des jambages (i.e. chaque jambe 810 étant effilée avec une largeur longitudinale et/ou une épaisseur transversale continûment décroissante de haut en bas) en présentant sensiblement dans cet exemple une forme de virgule aux bords 812 et 813 continûment incurvés entre deux ajours 811 adjacents (ces bords 812 et 813 étant de préférence respectivement convexe et concave) et jusqu'à l'extrémité libre arrondie. Dans l'exemple de la figure 23, chaque jambe 810 a sa largeur qui décroît continûment vers son extrémité libre, étant précisé qu'en remplacement ou en plus de sa largeur, c'est son épaisseur qui pourrait décroître dans cette direction. On voit que les ajours 811 présentent chacun une aire nettement inférieure à celle de chaque jambe 810 adjacente.

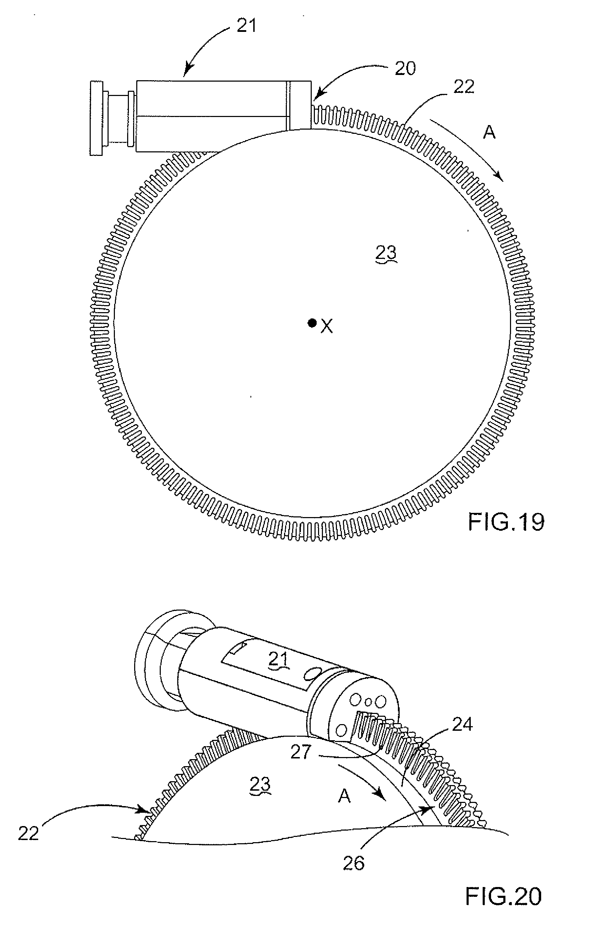

Comme cela va être à présent décrit en référence aux figures 19 à 22, 24, 25, 27 et 28, les sommets, jambages et nervures précités en relation avec les figures 4 à 18 et 23 sont formés d'un seul tenant en étant exclusivement venus d'extrusion (i.e. sans calandrage et sans opérations ultérieures de découpe, d'entaillage ou de sciage, contrairement à l'art antérieur).

Les figures 19 à 22 et 25, 27, 28 illustrent la structure et le fonctionnement d'un filière spécifique d'extrusion 20 utilisable pour fabriquer d'une manière générale des armatures incluant les armatures 3 à 803 à nervures 14 à 814, 15 à 715, 516 et 616 mais en outre toutes autres armatures thermoplastiques cintrables et ajourées de section par exemple en U, dont les jambages peuvent être reliés entre eux au niveau du sommet de l'armature (lequel sommet peut être plein ou ajouré) et peuvent par exemple (voir figures 23 et 24) présenter chacun une multitude de jambes qui sont chacune au choix :
- symétriques ou asymétriques,
- droites (i.e. de largeur dans la direction longitudinale et d'épaisseur dans la direction transversale toutes deux constantes) ou effilées (i.e. de largeur et/ou d'épaisseur décroissante(s) du sommet vers l'extrémité libre de chaque jambe), et
- ces jambes étant optionnellement reliées entre elles par une nervure telle que celles précitées en référence aux figures 4 à 18 et 23.

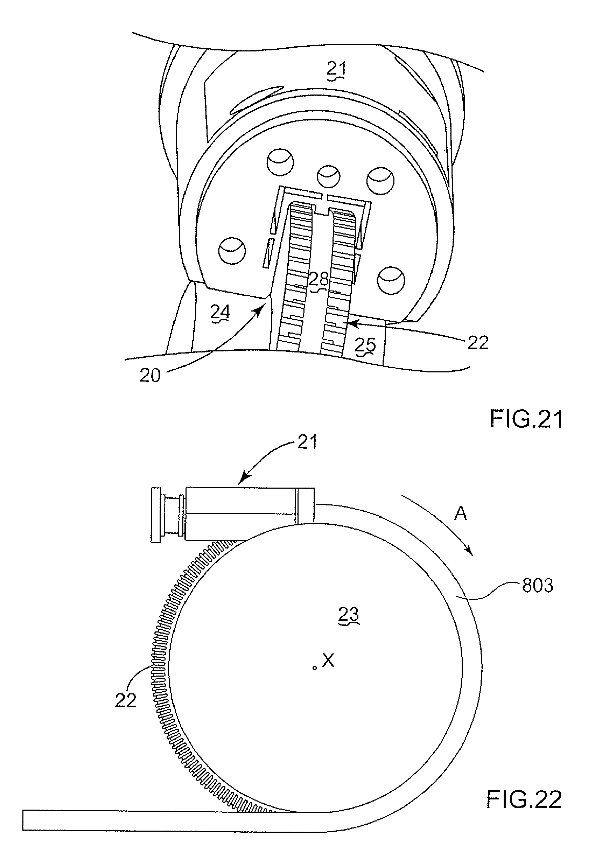

Les figures 20, 21 et 25, 27, 28 montrent schématiquement la géométrie de la filière d'extrusion 20 de profil en U qui est notamment utilisable pour obtenir une armature 803 en U telle que celle des figures 23 et 24, qui est visible en cours d'extrusion à la figure 22.

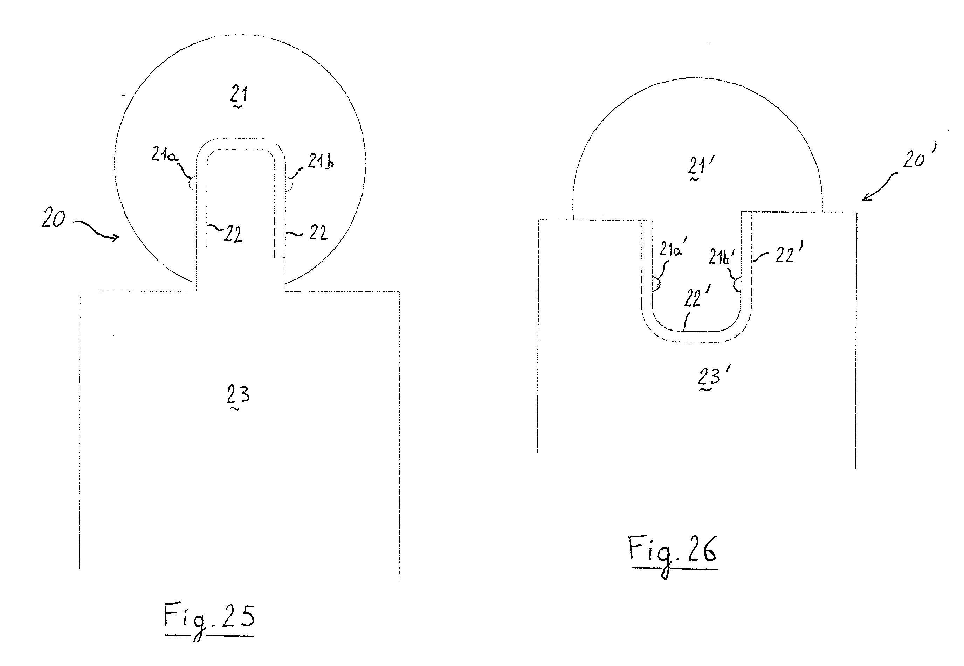

Cette filière 20 est formée par une tête d'extrudeuse 21 fixe recouvrant tangentiellement la périphérie 22 d'une roue 23, laquelle est entraînée en rotation autour de son axe de symétrie X dans le sens de la flèche A et est destinée à recevoir en sa périphérie 22 le matériau thermoplastique (e.g. un polypropylène renforcé) quittant la tête 21, de manière que cette périphérie 22 pénètre à l'intérieur de la tête 21 puis en sorte recouverte par le matériau extrudé 803. Plus précisément et comme visible aux figures 21 et 25, la périphérie de roue 22 est reliée au reste de la roue 23 par deux épaulements circonférentiels 24 et 25 qui sont symétriques l'un de l'autre par rapport à cette périphérie 22 et qui sont surmontés par l'extérieur de la tête d'extrudeuse 21.

La périphérie de roue 22 est munie d'empreintes en creux conçues pour former directement l'armature 803, et cette périphérie 22 comprend plus précisément :
- deux flancs périphériques radiaux 26 présentant respectivement deux empreintes identiques de dentures 27 destinées à former les jambes 810 et les ajours 811 lors de leur recouvrement, et
- un sommet périphérique circonférentiel 28 présentant une empreinte en creux destinée à former le sommet 815, 815' lors de son recouvrement.

A des fins de simplification des figures 19, 20 et 22, on n'a pas représenté sur ces figures la forme précisément asymétrique des dentures en creux 27 formées sur les flancs radiaux 26 de la périphérie de roue 22, étant entendu que cette forme asymétrique est par exemple celle illustrée à la figure 24, avec des empreintes 27' en forme de virgules conçues pour former l'armature 803'.

Comme indiqué plus haut et visible à cette figure 24, on notera que cette géométrie asymétrique des jambes 810 présente notamment l'avantage d'améliorer la séparation de cette armature extrudée 803, 803' vis-à-vis de la périphérie de roue 22, en comparaison d'armatures présentant des jambes globalement triangulaires ou trapézoïdales mais symétriques par rapport à leur extrémité libre (i.e. des jambes en forme de triangle isocèle à sommet pointu ou arrondi ou plat).

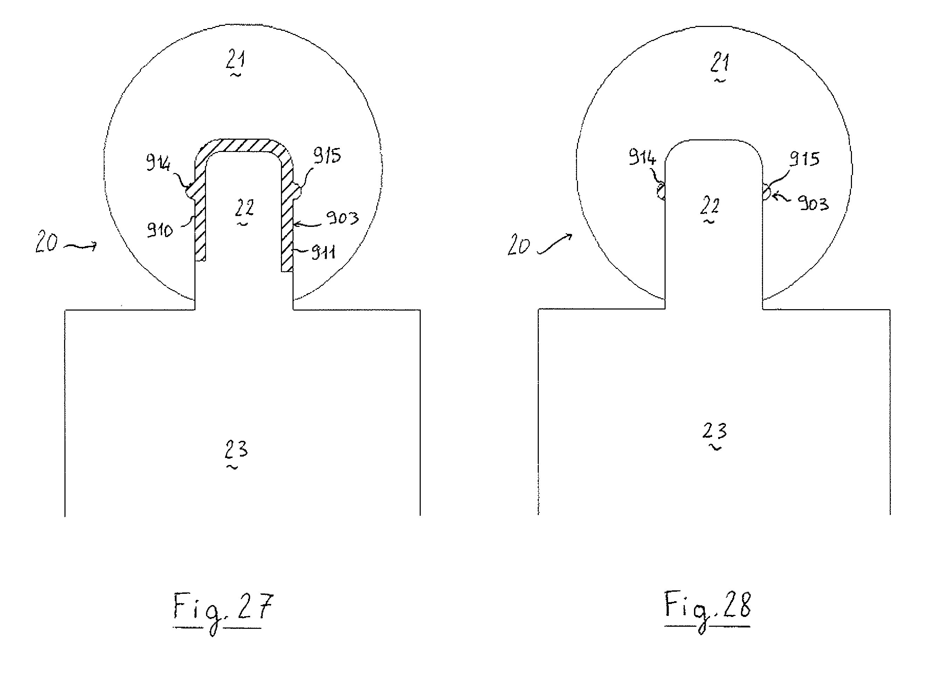

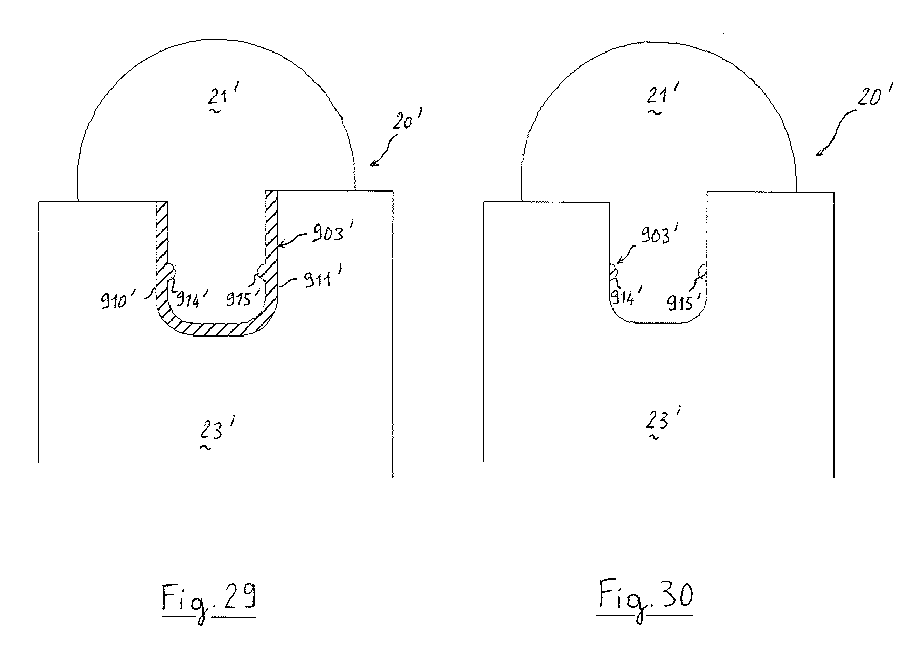

Contrairement à la filière 20 des figures 25, 27 et 28 où la périphérie de roue 22 pénètre lors de sa rotation à l'intérieur de la tête d'extrudeuse fixe 21 pour l'obtention des portions transversales de l'armature 903 reliées entre elles par des nervures 914 et 915 sur les faces externes respectives des jambages 910 et 911 (ces nervures 914 et 915, visibles aux figures 27 et 28 qui se rapportent respectivement aux plans de coupe I-I et II-II de la figure 4, étant obtenues par des empreintes 21 a et 21 b correspondantes visibles à la figure 25 et formées à l'intérieur de la tête 21), la filière 20' des figures 26, 29 et 30 est telle que la tête d'extrudeuse fixe 21' pénètre à l'intérieur de la périphérie 22' de la roue 23' de forme rentrante lors de la rotation de cette dernière, pour l'obtention des deux nervures 914' et 915' sur les faces internes respectives des deux jambages 910' et 911' de l'armature 903' (ces nervures 914' et 915', visibles aux figures 29 et 30, étant obtenues par des empreintes 21a' et 21 b' correspondantes visibles à la figure 26 et formées à l'intérieur de la tête 21).

Comme indiqué plus haut, on notera que cet agencement saillant de la tête d'extrudeuse 21' à l'intérieur de la périphérie 22' de la roue 23' est transposable à un organe de réception autre qu'une roue, par exemple de type chenille ou tapis roulant, à titre non limitatif, pour l'obtention d'une armature extrudée dont la ou chaque nervure destinée à former une fibre neutre pour le profilé l'incorporant est localisée sur la face interne du ou de chaque jambage de l'armature, en variante des armatures à nervures externes illustrées aux figures 4 à 18.

## Revendications

1. Armature thermoplastique cintrable (3, 103, ..., 703, 803) pour profilé d'étanchéité (1) ou d'enjoliveur de véhicule automobile, l'armature comprenant au moins un tronçon longitudinal (303a, 403a, ..., 603a, 703a) de section transversale sensiblement en U ou en L présentant un sommet (12, 112, 212, 312a, 612a, 712a, 815) et au moins un jambage (10, 110, ... , 410, 510 et 11, 111, ..., 411, 511) s'étendant à partir de ce sommet, cette armature comprenant sur sa longueur une succession discontinue de portions transversales (13, 810) reliées entre elles par des éléments de liaison longitudinaux, **caractérisée en ce que** lesdits éléments de liaison comprennent une nervure (14 à 814, 15 à 715, 516 et 616) globalement longitudinale qui est formée d'un seul tenant avec lesdites portions transversales en ledit ou chaque jambage et qui est conçue pour former une fibre neutre pour le profilé, et de préférence **en ce que** l'armature est exclusivement extrudée, ladite ou chaque nervure (14 à 814, 15 à 715, 516 et 616) étant dans ce cas directement venue d'extrusion.

2. Armature (3, 103, ..., 703, 803) selon la revendication 1, **caractérisée en ce que** lesdites portions transversales (13, 810) sont séparées deux à deux entre elles par des espaces transversaux (13a, 811) allant d'un bord latéral libre à l'autre de l'armature et sont exclusivement reliées entre elles par ladite ou chaque nervure (14 à 814, 15 à 715, 516 et 616), et **en ce qu'**en ledit sommet (12, 112, 212, 312a, 612a, 712a, 815) dudit au moins un tronçon longitudinal (303a, 403a, ..., 603a, 703a), ces portions transversales ne sont pas reliées entre elles ou bien le sont via des voiles interstitiels d'épaisseur réduite.

3. Armature (3, 103, ..., 703, 803) selon une des revendications précédentes, **caractérisée en ce que** ladite ou chaque nervure (14 à 814, 15 à 715, 516 et 616) s'étend de manière continue le long desdites portions transversales (13, 810), de telle manière qu'à une abscisse longitudinale donnée de cette nervure corresponde sur ledit au moins un jambage (10, 110, ... , 410, 510 et 11, 111, ..., 411, 511) une unique ordonnée transversale de cette nervure.

4. Armature (3, 103, 303, ..., 703, 803 ou 203) selon la revendication 3, **caractérisée en ce que** ladite ou chaque nervure (14, 114, 314, ..., 814, 15, 115, 315, ..., 715, 516 et 616) est rectiligne ou sous forme de ligne brisée, et est globalement parallèle audit sommet (12, 112, 312a, 612a, 712a, 815) ou inclinée par rapport à ce dernier, ou bien **en ce que** ladite ou chaque nervure (214, 215) est incurvée en étant soit progressivement inclinée vers ledit sommet (212), soit ondulée en s'éloignant puis en se rapprochant alternativement dudit sommet.

5. Armature (3, 103, 203, ..., 703, 803) selon une des revendications précédentes, ledit au moins un jambage (10, 110, ... , 410, 510 et 11, 111, ..., 411, 511) présentant une face interne et une face externe, **caractérisée en ce que** ladite ou chaque nervure (14 à 814, 15 à 715, 516 et 616) forme une surépaisseur sur ladite face interne ou externe de hauteur transversale réduite par rapport à celle de ce jambage.

6. Armature (3, 103, 203, ..., 703, 803) selon une des revendications précédentes, **caractérisée en ce que** ladite ou chaque nervure (14 à 814, 15 à 715, 516 et 616) est creuse sur sa longueur, un fil anti-allongement y étant inséré pour raidir l'armature dans la direction longitudinale.

7. Armature (3, 103, ..., 703, 803) selon une des revendications précédentes, **caractérisée en ce que** ladite ou chaque nervure (14 à 714, 15 à 715, 516 et 616) est réalisée en un matériau thermoplastique identique ou différent de celui desdites portions transversales (13).

8. Armature (3, 103, ..., 703, 803) selon une des revendications précédentes, **caractérisée en ce que** ledit au moins un tronçon longitudinal (303a, 403a, ..., 603a, 703a) présente une section transversale sensiblement en U destinée à servir de pince pour le profilé (1) et présentant deux jambages (10, 110, ... , 410, 510 et 11, 111, ..., 411, 511) de longueurs identiques ou différentes qui s'étendent sensiblement à angle droit à partir dudit sommet (12, 112, 212, 312a, 612a, 712a, 815) et qui incorporent chacun sur leur face interne ou externe ladite nervure (14 à 814, 15 à 715, 516 et 616).

9. Armature (3, 103, 203, 803) selon la revendication 8, **caractérisée en ce qu'**elle est constituée d'un unique dit tronçon longitudinal de section transversale sensiblement en U.

10. Armature (303, ..., 703) selon la revendication 8, **caractérisée en ce qu'**elle est constituée de deux dits tronçons longitudinaux (303a et 303b, 403a et 403b, 603a et 603b, 703a et 703b) de sections transversales sensiblement en U qui se prolongent mutuellement dans la direction transversale de sorte que l'armature présente trois jambages (310, 311, 311 a) sensiblement parallèles entre eux, le jambage latéral (311 a) adjacent aux deux jambages formant pince (310 et 311) incorporant lui aussi optionnellement une dite nervure (516, 616), et de préférence **en ce que** l'armature présente une section transversale sensiblement en S à trois jambages (310, 311, 311a) de hauteurs identiques ou différentes, ledit jambage latéral (311a) incorporant une dite nervure (516, 616) sur l'une de ses faces.

11. Armature (803) selon une des revendications précédentes, **caractérisée en ce que** lesdites portions transversales (810) sont séparées deux à deux entre elles par des espaces transversaux (811) en ledit au moins un jambage, lequel, sur au moins une partie de la longueur de l'armature, y a chacune de ses portions transversales qui est asymétrique et d'aire supérieure à celle de chaque espace adjacent, et de préférence **en ce que** chaque portion asymétrique (810) présente sur ledit au moins un jambage sensiblement une forme de dent de scie comprenant deux bords de dent (812 et 813) qui présentent chacun un profil droit ou incurvé et qui se rejoignent en une extrémité de dent pointue ou arrondie, de sorte que ladite au moins une partie d'armature soit sensiblement en forme de denture de scie dont les dents sont inclinées d'un même côté, chaque jambe asymétrique (810) présentant de préférence sensiblement une forme de virgule dont l'un desdits bords de dent (812) est incurvé de manière convexe et dont l'autre bord de dent (813) est sensiblement droit ou incurvé de manière concave.

12. Profilé d'étanchéité (1) ou d'enjoliveur de véhicule automobile comportant une armature thermoplastique (3, 103, ..., 703, 803) et au moins un enrobage élastomère plus souple que cette armature et extrudé sur cette dernière, **caractérisé en ce que** l'armature est telle que définie à l'une des revendications précédentes, et de préférence **en ce que** le profilé comporte essentiellement :
- une partie formant pince (2) qui est renforcée par ladite armature (3, 103, ..., 703, 803) pour son montage sur une feuillure de cadre et dont l'enrobage est réalisé en un matériau élastomère compatible avec celui de l'armature, ce matériau étant de préférence à base d'au moins un élastomère thermoplastique (TPE), tel qu'un élastomère thermoplastique styrénique (TPS) ou un vulcanisat thermoplastique (TPV), ou d'au moins un caoutchouc, tel qu'un EPDM, et
- une partie d'étanchéité souple et déformable (9) tubulaire ou en forme de lèvre, qui est réalisée en un matériau élastomère de préférence cellulaire à base d'au moins un TPE, tel qu'un TPS ou un TPV, ou d'au moins un caoutchouc, tel qu'un EPDM, et qui prolonge cette partie formant pince en une aile (8) du U.

13. Procédé de fabrication d'armatures thermoplastiques cintrables et ajourées pour profilés d'étanchéité ou d'enjoliveur de véhicule automobile, l'armature (3, 103, ..., 703, 803) étant telle que définie à l'une des revendications 1 à 11, **caractérisé en ce qu'**il comprend une extrusion d'au moins un matériau thermoplastique (803, 803', 903, 903') à travers une filière (20, 20') formée entre une tête d'extrudeuse (21, 21') et un organe de réception (23, 23') du matériau quittant cette tête qui est muni d'une empreinte en creux (26, 28) conçue pour former directement cette armature, de manière que ce matériau ainsi extrudé recouvre progressivement cet organe de réception, puis une séparation de ce matériau d'avec l'organe de réception, et de préférence **en ce que** ce procédé est exempt d'étape de post-formage dudit au moins un matériau thermoplastique (803, 803') extrudé, telle qu'une étape de découpe, de sciage ou d'entaillage.

14. Procédé selon la revendication 13, **caractérisé en ce que** l'armature (3, 103, ..., 703, 803) comprend au moins un tronçon longitudinal (303a, 403a, ..., 603a, 703a) de section transversale sensiblement en U ou en L présentant un sommet (12, 112, 212, 312a, 612a, 712a, 815) et au moins un jambage (10, 110, ... , 410, 510 et 11, 111, .... 411, 511) s'étendant à partir de ce sommet, et dans lequel :
- ladite filière (20, 20') est formée par une tête d'extrudeuse (21, 21') fixe recouvrant tangentiellement la périphérie (22, 22') d'une roue (23, 23') qui forme ledit organe de réception et qui tourne autour de son axe (X) de manière que sa périphérie pénètre à l'intérieur de cette tête ou soit pénétrée par cette tête pour que le matériau extrudé (803, 803', 903, 903') recouvre progressivement cette périphérie de roue lors de sa rotation, laquelle périphérie présente, d'une part, au moins un flanc périphérique radial (26) présentant une empreinte en creux (27') formant ledit au moins un jambage lors de son recouvrement par ledit matériau et, d'autre part, au moins un bord circonférentiel (28) présentant une empreinte en creux formant ledit au moins un sommet (815') lors de son recouvrement, ou bien en ce que
- ladite filière est formée par une tête d'extrudeuse fixe recouvrant tangentiellement la périphérie d'une chenille ou d'un tapis roulant qui forme ledit organe de réception et dont la cinématique comprend une succession de mouvements de translation et de rotation autour de deux axes, de manière que la périphérie de cette chenille ou de ce tapis pénètre à l'intérieur de cette tête ou soit pénétrée par cette tête pour que le matériau extrudé recouvre progressivement cette périphérie lors de sa cinématique, laquelle périphérie présente, d'une part, au moins un flanc périphérique radial présentant une empreinte en creux formant ledit au moins un jambage lors de son recouvrement par ledit matériau et, d'autre part, un bord circonférentiel présentant une empreinte en creux formant ledit au moins un sommet lors de son recouvrement.

15. Procédé selon la revendication 14, **caractérisé en ce que** ladite périphérie (22) dudit organe de réception (23) présente une forme saillante qui pénètre à l'intérieur de ladite tête (21), pour l'obtention de ladite ou de chaque nervure (914, 915) sur une face externe dudit ou de chaque jambage (910, 911), ou bien **en ce que** ladite périphérie (22') dudit organe de réception (23') présente une forme rentrante à l'intérieur de laquelle pénètre ladite tête (21'), pour l'obtention de ladite ou de chaque nervure (914', 915') sur une face interne dudit ou de chaque jambage (910', 911').

## Patentansprüche

1. Biegsame thermoplastische Bewehrung (3, 103, ..., 703, 803) für ein Kraftfahrzeugdichtungsprofil (1) oder Kraftfahrzeugzierblendenprofil, wobei die Bewehrung mindestens einen Längsabschnitt (303a, 403a, ..., 603a, 703a) mit einem im Wesentlichen U- oder L-förmigen Querschnitt aufweist, mit einem Kopf (12, 112, 212, 312a, 612a, 712a, 815) und mindestens einem sich ausgehend von diesem Kopf erstreckenden Schenkel (10, 110,..., 410, 510 und 11, 111, ..., 411, 511), wobei diese Bewehrung auf ihrer Länge eine diskontinuierliche Folge von Querabschnitten (13, 810) aufweist, die durch längliche Verbindungselemente miteinander verbunden sind, **dadurch gekennzeichnet, dass** die Verbindungselemente eine insgesamt längliche Rippe (14 bis 814, 15 bis 715, 516 und 616) aufweisen, die an dem oder an jedem Schenkel mit den Querabschnitten einstückig ausgebildet und dazu ausgelegt ist, eine neutrale Faser für das Profil zu bilden, und vorzugsweise dadurch, dass die Bewehrung ausschließlich extrudiert ist, wobei die Rippe oder jede Rippe (14 bis 814, 15 bis 715, 516 und 616) in diesem Fall direkt aus einem Stück extrudiert ist.

2. Bewehrung (3, 103, ..., 703, 803) nach Anspruch 1, **dadurch gekennzeichnet, dass** die Querabschnitte (13, 810) paarweise durch querverlaufende Zwischenräume (13a, 811) voneinander getrennt sind, die von einem freien Seitenrand der Bewehrung zum anderen verlaufen und ausschließlich durch die oder durch jede Rippe (14 bis 814, 15 bis 715, 516 und 616) miteinander verbunden sind, und dadurch, dass am Kopf (12, 112, 212, 312a, 612a, 712a, 815) des mindestens einen Längsabschnitts (303a, 403a, ..., 603a, 703a) diese Querabschnitte nicht miteinander verbunden sind oder über Zwischenräume füllende Abdeckungen mit verringerter Dicke miteinander verbunden sind.

3. Bewehrung (3, 103, ..., 703, 803) nach einem der vorhergehenden Ansprüche, **dadurch gekennzeichnet, dass** sich die Rippe oder jede Rippe (14 bis 814, 15 bis 715, 516 und 616) kontinuierlich entlang der Querabschnitte (13, 810) erstreckt, so dass einer gegebenen Längsabszisse dieser Rippe auf dem mindestens einen Schenkel (10, 110, ..., 410, 510 und 11, 111, ..., 411, 511) eine einzige Querordinate dieser Rippe entspricht.

4. Bewehrung (3, 103, 303, ..., 703, 803 oder 203) nach Anspruch 3, **dadurch gekennzeichnet, dass** die Rippe oder jede Rippe (14, 114, 314, ..., 814, 15, 115, 315, ..., 715, 516 und 616) geradlinig oder als punktierte Linie gebildet ist und insgesamt parallel zum Kopf (12, 112, 312a, 612a, 712a, 815) oder geneigt zu diesem verläuft, oder dadurch, dass die Rippe oder jede Rippe (214, 215) gekrümmt ist und dabei entweder progressiv zum Kopf (212) geneigt ist oder gewellt ist und sich dabei abwechselnd vom Kopf entfernt und sich diesem nähert.

5. Bewehrung (3, 103, 203, ..., 703, 803) nach einem der vorhergehenden Ansprüche, wobei der mindestens eine Schenkel (10, 110, ..., 410, 510 und 11, 111, ..., 411, 511) eine Innenfläche und eine Außenfläche aufweist, **dadurch gekennzeichnet, dass** die Rippe oder jede Rippe (14 bis 814, 15 bis 715, 516 und 616) auf der Innen- oder Außenfläche eine Überdicke bildet, deren Höhe in Querrichtung bezogen auf diejenige dieses Schenkels verringert ist.

6. Bewehrung (3, 103, 203, ..., 703, 803) nach einem der vorhergehenden Ansprüche, **dadurch gekennzeichnet, dass** die Rippe oder jede Rippe (14 bis 814, 15 bis 715, 516 und 616) auf ihrer Länge hohl ist, wobei ein Antidehnungsfaden darin eingesetzt ist, um die Bewehrung in Längsrichtung zu versteifen.

7. Bewehrung (3, 103, ..., 703, 803) nach einem der vorhergehenden Ansprüche, **dadurch gekennzeichnet, dass** die Rippe oder jede Rippe (14 bis 714, 15 bis 715, 516 und 616) aus einem thermoplastischen Material hergestellt ist, das mit demjenigen der Querabschnitte (13) identisch ist oder sich von diesem unterscheidet.

8. Bewehrung (3, 103, ..., 703, 803) nach einem der vorhergehenden Ansprüche, **dadurch gekennzeichnet, dass** der mindestens eine Längsabschnitt (303a, 403a, ..., 603a, 703a) einen im Wesentlichen U-förmigen Querschnitt aufweist, der als Zange für das Profil (1) dienen soll und zwei Schenkel (10, 110, ..., 410, 510 und 11, 111, ..., 411, 511) mit identischen oder unterschiedlichen Längen aufweist, die sich ausgehend von dem Kopf (12, 112, 212, 312a, 612a, 712a, 815) im Wesentlichen rechtwinklig erstrecken und jeweils auf ihrer Innen- oder Außenfläche die Rippe (14 bis 814, 15 bis 715, 516 und 616) aufnehmen.

9. Bewehrung (3, 103, 203, 803) nach Anspruch 8, **dadurch gekennzeichnet, dass** sie aus einem einzigen Längsabschnitt mit im Wesentlichen U-förmigem Querschnitt besteht.

10. Bewehrung (303, ..., 703) nach Anspruch 8, **dadurch gekennzeichnet, dass** sie aus zwei Längsabschnitten (303a und 303b, 403a und 403b, 603a und 603b, 703a und 703b) mit im Wesentlichen U-förmigem Querschnitt besteht, die sich in Querrichtung gegenseitig verlängern, so dass die Bewehrung drei zueinander im Wesentlichen parallele Schenkel (310, 311, 311 a) aufweist, wobei der Seitenschenkel (311a), der an die zwei eine Zange bildenden Schenkel (310 und 311) angrenzt, auch optional eine Rippe (516, 616) aufnimmt, und vorzugsweise dadurch, dass die Bewehrung einen im Wesentlichen S-förmigen Querschnitt mit drei Schenkeln (310, 311, 311a) mit identischen oder unterschiedlichen Höhen aufweist, wobei der Seitenschenkel (311a) auf einer seiner Flächen eine Rippe (516, 616) aufnimmt.

11. Bewehrung (803) nach einem der vorhergehenden Ansprüche, **dadurch gekennzeichnet, dass** die Querabschnitte (810) paarweise durch querverlaufende Zwischenräume (811) an dem mindestens einen Schenkel voneinander getrennt sind, bei dem auf mindestens einem Teil der Länge der Bewehrung jeder seiner Querabschnitte asymmetrisch ist und eine Fläche hat, die größer ist als die jedes angrenzenden Zwischenraums, und vorzugsweise dadurch, dass jeder asymmetrische Abschnitt (810) auf dem mindestens einen Schenkel im Wesentlichen die Form eines Sägezahns mit zwei Zahnrändern (812 und 813) aufweist, die jeweils ein gerades oder gekrümmtes Profil aufweisen und zu einem spitzen oder abgerundeten Zahnende zusammenlaufen, so dass der mindestens eine Teil der Bewehrung im Wesentlichen die Form einer Sägezahnverzahnung aufweist, deren Zähne auf ein und derselben Seite geneigt sind, wobei jeder asymmetrische Schenkel (810) vorzugsweise im Wesentlichen die Form eines Kommas, bei der einer der Zahnränder (812) konvex gekrümmt ist und der andere Zahnrand (813) im Wesentlichen gerade oder konkav gekrümmt ist.

12. Kraftfahrzeugdichtungsprofil (1) oder Kraftfahrzeugzierblendenprofil, mit einer thermoplastischen Bewehrung (3, 103, ..., 703, 803) und mindestens einer Elastomerumhüllung, die nachgiebiger ist als diese Bewehrung und auf dieser extrudiert ist, **dadurch gekennzeichnet, dass** die Bewehrung wie nach einem der vorhergehenden Ansprüche definiert ist, und vorzugsweise dadurch, dass das Profil hauptsächlich Folgendes aufweist:
- einen Teil, der eine Zange (2) bildet, die zu ihrer Anbringung an einem Rahmenanschlag durch die Bewehrung (3, 103, ..., 703, 803) verstärkt ist und deren Umhüllung aus einem Elastomermaterial gebildet ist, das mit demjenigen der Bewehrung kompatibel ist, wobei dieses Material vorzugsweise auf mindestens ein thermoplastisches Elastomer (TPE), wie etwa ein thermoplastisches Styrolelastomer (TPS) oder ein thermoplastisches Vulkanisat (TPV), oder auf mindestens ein Kautschuk, wie etwa ein EPDM basiert, und
- einen nachgiebigen und verformbaren Dichtungsteil (9), der rohr- oder lippenförmig ist und aus einem vorzugsweise zellulären Elastomermaterial hergestellt ist, das auf mindestens ein TPE, wie etwa ein TPS oder TPV, oder auf mindestens ein Kautschuk, wie etwa ein EPDM basiert, und der diesen eine Zange bildenden Teil an einem Flügel (8) des U verlängert.

13. Verfahren zur Herstellung biegsamer und durchbrochener thermoplastischer Bewehrungen für Kraftfahrzeugdichtungsprofile oder Kraftfahrzeugzierblendenprofüe, wobei die Bewehrung (3, 103, ..., 703, 803) wie nach einem der Ansprüche 1 bis 11 definiert ist, **dadurch gekennzeichnet, dass** es einen Vorgang zum Extrudieren mindestens eines thermoplastischen Materials (803, 803', 903, 903') durch ein Spritzmundstück (20, 20') umfasst, das zwischen einem Extruderkopf (21, 21') und einem Organ (23, 23') zur Aufnahme des aus diesem Kopf austretenden Materials gebildet ist, wobei das Organ mit einer vertieften Prägung (26, 28) versehen ist, die dazu ausgelegt ist, diese Bewehrung direkt zu bilden, so dass dieses auf diese Weise extrudierte Material allmählich dieses Aufnahmeorgan bedeckt, wobei es dann eine Trennung dieses Materials von dem Aufnahmeorgan umfasst, und vorzugsweise dadurch, dass dieses Verfahren keinen Schritt zur Nachverformung des mindestens einen extrudierten thermoplastischen Materials (803, 803'), wie etwa einen Schnitt-, Säge- oder Einschneideschritt umfasst.

14. Verfahren nach Anspruch 13, **dadurch gekennzeichnet, dass** die Bewehrung (3, 103, ..., 703, 803) mindestens einen Längsabschnitt (303a, 403a, ..., 603a, 703a) mit einem im Wesentlichen U- oder L-förmigen Querschnitt aufweist, mit einem Kopf (12, 112, 212, 312a, 612a, 712a, 815) und mindestens einem sich ausgehend von diesem Kopf erstreckenden Schenkel (10, 110, ..., 410, 510 und 11, 111, ... , 411, 511), und bei dem:
- das Spritzmundstück (20, 20') durch einen festen Extruderkopf (21, 21') gebildet ist, der den Umfang (22, 22') eines Rads (23, 23') tangential bedeckt, das das Aufnahmeorgan bildet und sich um seine Achse (X) dreht, so dass sein Umfang in das Innere dieses Kopfes dringt oder dieser Kopf darin eindringt, so dass das extrudierte Material (803, 803', 903, 903') allmählich diesen Radumfang bei seiner Drehung bedeckt, wobei der Umfang einerseits mindestens eine radiale Umfangsflanke (26) mit einer vertieften Prägung (27'), die den mindestens einen Schenkel bei seiner Bedeckung mit dem Material bildet, und andererseits mindestens einen umlaufenden Rand (28) mit einer vertieften Prägung aufweist, die den mindestens einen Kopf (815') bei seiner Bedeckung bildet, oder dadurch, dass
- das Spritzmundstück durch einen festen Extruderkopf gebildet ist, der den Umfang einer Raupe oder eines Förderbands tangential bedeckt, die bzw. das das Aufnahmeorgan bildet und deren bzw. dessen Kinematik eine Abfolge von Translations- und Rotationsbewegungen um zwei Achsen umfasst, so dass der Umfang dieser Raupe oder dieses Bands in das Innere dieses Kopfes dringt oder dieser Kopf darin eindringt, so dass das extrudierte Material allmählich diesen Umfang bei seiner Kinematik bedeckt, wobei der Umfang einerseits mindestens eine radiale Umfangsflanke mit einer vertieften Prägung, die den mindestens einen Schenkel bei seiner Bedeckung mit dem Material bildet, und andererseits mindestens einen umlaufenden Rand mit einer vertieften Prägung aufweist, die den mindestens einen kopf bei seiner Bedeckung bildet.

15. Verfahren nach Anspruch 14, **dadurch gekennzeichnet, dass** der Umfang (22) des Aufnahmeorgans (23) eine hervorstehenden Form aufweist, die in das Innere des Kopfes (21) dringt, um die Rippe oder jede Rippe (914, 915) auf einer Außenfläche des Schenkels oder jedes Schenkels (910, 911) zu erhalten, oder dadurch, dass der Umfang (22') des Aufnahmeorgans (23') eine einspringende Form aufweist, in die der Kopf (21') eindringt, um die Rippe oder jede Rippe (914', 915') auf einer Innenfläche des Schenkels oder jedes Schenkels (910', 911') zu erhalten.

## Claims

1. A bendable thermoplastic reinforcement (3, 103, ..., 703, 803) for a profiled seal (1) or profiled molding in a motor vehicle, the reinforcement comprising at least one longitudinal portion (303a, 403a, ..., 603a, 703a) of substantially U-shaped or L-shaped cross section having a top portion (12, 112, 212, 312a, 612a, 712a, 815) and at least one limb (10, 110, ... , 410, 510 and 11, 111, ..., 411, 511) extending from said top portion, said reinforcement comprising over its length a discontinuous series of transverse sections (13, 810) connected together by longitudinal connecting elements, **characterized in that** said connecting elements comprise a generally longitudinal rib (14 to 814, 15 to 715, 516 and 616) which is formed in one piece with said transverse sections in said or each limb and which is designed to form a neutral axis for the profiled seal or molding, and preferably **in that** the reinforcement is exclusively extruded, said or each rib (14 to 814, 15 to 715, 516 and 616) being **in that** case directly extruded.

2. The reinforcement (3, 103, ..., 703, 803) as claimed in claim 1, **characterized in that** said transverse sections (13, 810) are separated in pairs from one another by transverse spaces (13a, 811) passing from one free lateral edge to the other of the reinforcement and are exclusively connected to one another by said or each rib (14 to 814, 15 to 715, 516 and 616), and **in that** at said top portion (12, 112, 212, 312a, 612a, 712a, 815) of said at least one longitudinal portion (303a, 403a, ..., 603a, 703a), said transverse sections are not connected together or are connected via interstitial webs of reduced thickness.

3. The reinforcement (3, 103, ..., 703, 803) as claimed in one of the preceding claims, **characterized in that** said or each rib (14 to 814, 15 to 715, 516 and 616) extends continuously along said transverse sections (13, 810), such that on said at least one limb (10, 110, ... , 410, 510 and 11, 111, ..., 411, 511) only one ordinate transverse to said rib corresponds to one given longitudinal abscissa of said rib.

4. The reinforcement (3, 103, 303, ..., 703, 803) as claimed in claim 3, **characterized in that** said or each rib (14, 114, 314, ..., 814, 15, 115, 315, ..., 715, 516 and 616) is rectilinear or in the form of a broken line and is substantially parallel with said top portion (12, 112, 312a, 612a, 712a, 815) or inclined relative thereto, or else **in that** said or each rib (214, 215) is curved, either by being progressively inclined toward said top portion (212), or undulated by alternately moving away and then approaching said top portion.

5. The reinforcement (3, 103, 203, ..., 703, 803) as claimed in one of the preceding claims, said at least one limb (10, 110, ..., 410, 510 and 11, 111, ..., 411, 511) having an internal face and an external face, **characterized in that** said or each rib (14 to 814, 15 to 715, 516 and 616) forms an overthickness on said internal or external face of reduced transverse height relative to that of said limb.

6. The reinforcement (3, 103, 203, ..., 703, 803) as claimed in one of the preceding claims, **characterized in that** said or each rib (14 to 814, 15 to 715, 516 and 616) is hollow over its length, an anti-elongation thread being inserted therein to stiffen the reinforcement in the longitudinal direction.

7. The reinforcement (3, 103, ..., 703, 803) as claimed in one of the preceding claims, **characterized in that** said or each rib (14 to 714, 15 to 715, 516 and 616) is made of a thermoplastic material which is identical to or different from that of said transverse sections (13).

8. The reinforcement (3, 103, ..., 703, 803) as claimed in one of the preceding claims, **characterized in that** said at least one longitudinal portion (303a, 403a, ..., 603a, 703a) has a substantially U-shaped cross section designed to serve as a grip for the profiled element (1) and having two limbs (10, 110, ... , 410, 510 and 11, 111, ..., 411, 511) of identical or different lengths which extend substantially at right angles from said top portion (12, 112, 212, 312a, 612a, 712a, 815) and which each incorporate said rib (14 to 814, 15 to 715, 516 and 616) on their internal or external face.

9. The reinforcement (3, 103, 203, 803) as claimed in claim 8, **characterized in that** it consists of a single said longitudinal portion of substantially U-shaped cross section.

10. The reinforcement (303, ..., 703) as claimed in claim 8, **characterized in that** it consists of two said longitudinal portions (303a and 303b, 403a and 403b, 603a and 603b, 703a and 703b) of substantially U-shaped cross section which extend mutually in the transverse direction such that the reinforcement has three limbs (310, 311, 311a) substantially parallel with one another, the lateral limb (311a) adjacent to the two limbs forming the grip (310 and 311) in turn also optionally incorporating one said rib (516, 616), and preferably **in that** the reinforcement has a substantially S-shaped cross section with three limbs (310, 311, 311a) of identical or different heights, said lateral limb (311a) incorporating one said rib (516, 616) on one of its faces.

11. The reinforcement (803) as claimed in one of the preceding claims, **characterized in that** said transverse sections (810) are separated in pairs from one another by transverse spaces (811) into said at least one limb which, over at least one part of the length of the reinforcement, has each of its transverse portions which is asymmetrical and of greater area than that of each adjacent space, and preferably **in that** each asymmetrical section (810) has on said at least one limb substantially the shape of a saw tooth comprising two tooth edges (812 and 813) which each have a straight or curved profile and which are joined together at one pointed or rounded tooth end, such that said at least one part of the reinforcement is substantially in the shape of a saw tooth of which the teeth are inclined on a same side, each asymmetrical limb (810) preferably having substantially the shape of a comma, of which one of said tooth edges (812) is curved in a convex manner and of which the other tooth edge (813) is substantially straight or curved in a concave manner.

12. A profiled seal (1) or profiled molding for a motor vehicle comprising a thermoplastic reinforcement (3, 103, ..., 703, 803) and at least one elastomeric coating which is more flexible than said reinforcement and extruded thereon, **characterized in that** the reinforcement is as defined in one of the preceding claims, and preferably **in that** the profiled seal essentially comprises :
- a part forming a grip (2) which is reinforced by said reinforcement (3, 103, ..., 703, 803) for the mounting thereof on a rebate of a frame and of which the coating is made of an elastomeric material which is compatible with that of the reinforcement, said material preferably being based on at least one thermoplastic elastomer (TPE) such as a styrene thermoplastic elastomer (TPS) or a thermoplastic vulcanizate (TPV), or at least one rubber, such as an EPDM, and
- a flexible and deformable seal part (9) which is tubular or in the form of a lip which is made of an elastomeric material which is preferably cellular and based on at least one TPE, such as a TPS or a TPV or at least one rubber, such as an EPDM, and which extends said part forming the grip in one arm (8) of the U-shape.

13. A method for the production of bendable and slotted thermoplastic reinforcements for profiled seals or profiled moldings in a motor vehicle, the reinforcement (3, 103, ..., 703, 803) being as claimed in one of claims 1 to 11, **characterized in that** it comprises an extrusion of at least one thermoplastic material (803, 803', 903, 903') via a die (20, 20') formed between an extruder head (21, 21') and a receiving member (23, 23') for the material being discharged from said head, which receiving member is provided with a hollow cavity (26, 28) configured to form directly said reinforcement, so that said material thus extruded progressively covers said receiving member, followed by a separation of said material from the receiving member, and preferably **in that** this method is without a post-forming step of said at least one extruded thermoplastic material (803, 803'), such as a cutting, sawing or notching step.

14. The method as claimed in claim 13, **characterized in** the the reinforcement (3, 103, ..., 703, 803) comprises at least one longitudinal portion (303a, 403a, ..., 603a, 703a) of substantially U-shaped or L-shaped cross section having a top portion (12, 112, 212, 312a, 612a, 712a, 815) and at least one limb (10, 110, ... , 410, 510 and 11, 111, ..., 411, 511) extending from said top portion, and in that:
- said die (20, 20') is formed by a fixed extruder head (21, 21') covering tangentially the periphery (22, 22') of a wheel (23, 23') which forms said receiving member and which rotates about its axis (X) so that its periphery penetrates inside said head or is penetrated by said head so that the extruded material (803, 803', 903, 903') progressively covers said wheel periphery during its rotation, which periphery has, firstly, at least one peripheral radial flank (26) having a hollow cavity (27') forming said at least one limb when covered by said material and, secondly, at least one circumferential edge (28) having a hollow cavity forming said at least one top portion (815') when covered, or else in that
- said die is formed by a fixed extruder head tangentially covering the periphery of a track or conveyor belt which forms said receiving member and of which the kinematics comprises a series of movements in translation and rotation about two axes, so that the periphery of said track or of said conveyor belt penetrates inside said head or is penetrated by said head so that the extruded material progressively covers said periphery during its kinematic movement, which periphery has, firstly, at least one peripheral radial flank having a hollow cavity forming said at least one limb when covered by said material and, secondly, a circumferential edge having a hollow cavity forming said at least one top portion when covered.

15. The method as claimed in claim 14, **characterized in that** said periphery (22) of said receiving member (23) has a protruding shape which penetrates inside said head (21), to obtain said or each rib (914, 915) on an external face of said or each limb (910, 911), or else **in that** said periphery (22') of said receiving member (23') has a retracted shape, inside which said head (21') penetrates to obtain said or each rib (914', 915') on an internal face of said or each limb (910', 911').
